# EUROPÄISCHE PATENTSCHRIFT

(11) **EP 3 313 675 B1**
(45) Veröffentlichungstag und Bekanntmachung des Hinweises auf die Patenterteilung: **20.03.2019**
(21) Anmeldenummer: 16738465.0
(22) Anmeldetag: 14.07.2016
(51) Int. Cl.: B60C 23/04

(54) **REIFENDRUCKKONTROLLSYSTEM FÜR EIN FAHRZEUG**
TYRE PRESSURE CONTROL SYSTEM FOR A VEHICLE
SYSTEME DE CONTROLE DE PRESSION DE PNEU POUR UN VEHICULE AUTOMOBILE

(30) Priorität: 25.08.2015 DE 102015114102
(43) Veröffentlichungstag der Anmeldung: 02.05.2018
(73) Patentinhaber: Huf Hülsbeck & Fürst GmbH & Co. KG, 42551 Velbert (DE)
(72) Erfinder: DEMENTYEV, Yevgen, 42287 Wuppertal (DE); GORENZWEIG, Igor, 42109 Wuppertal (DE); HELLER, Norbert, 47929 Grefrath (DE)
(74) Vertreter: Zenz Patentanwälte Partnerschaft mbB
(86) Internationale Anmeldenummer: PCT/EP2016/066767
(87) Internationale Veröffentlichungsnummer: WO 2017/032504

(56) Entgegenhaltungen:
- WO-A1-2014/108926
- CN-U- 201 751 217
- US-A1- 2012 304 755

## Beschreibung

Die Erfindung richtet sich auf ein Reifendruckkontrollsystem für ein Fahrzeug zur Ermittlung reifenspezifischer Parameter, aufweisend einen an einer Felge eines Luftreifens des Fahrzeugs anbringbaren Reifendrucksensor, ein Reifenventil, welches einen Ventilschaft mit einer längsverlaufenden Ventilbohrung aufweist, die in einer kalottenartigen Stirnfläche eines Ventilfußes mündet, ein Schraubelement, welches den Reifendrucksensor und das Reifenventil an dessen Ventilfuß durch Eingreifen in die Ventilbohrung verbindet, und eine zur Fixierung des Reifenventils an der Felge dienende und auf einen Gewindeabschnitt des Ventilschafts aufgeschraubte Überwurfmutter.

Ein Reifendruckkontrollsystem der Eingangs bezeichneten Art ist zum Beispiel aus der WO 2014/108926 A1, auf der der Oberbegriff des unabhängigen Anspruchs 1 basiert, und der EP 1 277 601 bekannt. Das System der EP 1 277 601 sieht vor, an der Innenseite einer Überwurfmutter einen Vorsprung als Sollbruchstelle auszubilden. Die Überwurfmutter wird über den Ventilschaft geführt und auf den Gewindeabschnitt des Ventilschafts aufgeschraubt. Der innere Vorsprung an der Überwurfmutter läuft beim Aufschrauben der Überwurfmutter auf das Reifenventil ab einer bestimmten Stellung auf den Gewindebeginn des Reifenventils auf, so dass der Ventilschaft mit der Überwurfmutter mitgedreht wird. Durch das Mitdrehen wird eine Verschraubung des Ventilschafts auf der Innenseite der Felge mit einem Schraubelement des Reifendrucksensors erreicht. Ist dort das Schraubelement bis zum Anschlag eingedreht, steigt das Drehmoment zwischen Überwurfmutter und Ventilschaft an, so dass der Vorsprung der Überwurfmutter abgeschert wird und die Überwurfmutter weiter auf den Ventilschaft aufgeschraubt werden kann, bis die Überwurfmutter an der Felge anliegt und das Reifenventil an der Felge fixiert ist. Da der Vorsprung innenseitig der Überwurfmutter ausgebildet ist, ist diese Sollbruchstelle für die Montage nicht sichtbar, was dazu führen kann, dass eine Überwurfmutter verwendet wird, bei welcher der Vorsprung bereits abgeschert ist, so dass die Überwurfmutter zur Wiederverwendung ungeeignet ist.

Vergleichbare Reifendruckkontrollsystem sind ferner bekannt aus der US 2012/304755 A1 und CN 201 751 217 U.

Ausgehend von diesem Stand der Technik liegt der Erfindung die Aufgabe zugrunde eine Lösung zu schaffen, die auf konstruktiv einfache Weise und kostengünstig ein Reifendruckkontrollsystem bereitstellt, welches eine einfache und zuverlässige Montage gewährleistet.

Bei einem Sensorsystem der Eingangs bezeichneten Art wird die Aufgabe erfindungsgemäß dadurch gelöst, dass ein über den Ventilschaft gesteckter und zwischen Überwurfmutter und Reifendrucksensor angeordneter Felgenschutzring vorgesehen ist, an dem ein den Felgenschutzring mit dem Reifenventil oder der Überwurfmutter bis zu einem vorbestimmten Abscherungsdrehmoment drehfest verbindendes Abscherungselement ausgebildet ist.

Vorteilhafte und zweckmäßige Ausgestaltungen und Weiterbildungen der Erfindung ergeben sich aus den Unteransprüchen.

Durch die Erfindung wird ein Reifendruckkontrollsystem zur Verfügung gestellt, welches sich durch eine funktionsgerechte Konstruktion auszeichnet und einen einfachen und kostengünstigen Aufbau aufweist. Im Unterschied zum Stand der Technik, bei dem eine Art Sollbruchstelle verdeckt im Inneren einer Überwurfmutter ausgebildet ist, ist das Abscherungselement bei der vorliegenden Erfindung optisch erfassbar angeordnet. Es ist dementsprechend für den Monteur optisch erkennbar, ob der für eine Klemmverbindung erforderliche Felgenschutzring mit dem Abscherungselement schon einmal verwendet wurde oder nicht. Dadurch, dass das Abscherungselement an dem Felgenschutzring ausgebildet ist, ist ferner eine Reduzierung der Bauteilanzahl des Reifendruckkontrollsystems möglich, denn es müssen nicht ein separates Abscherungselement und ein Felgenschutzring vorgesehen sein, sondern beides ist gemäß der vorliegenden Erfindung in einem einzigen Bauteil realisiert. Darüber hinaus ist der Felgenschutzring bereits standardmäßig vorgesehen, um die Felge vor Beschädigung im Falle eines zu hohen Anzugsdrehmoments zu schützen. Zusätzlich dient der Felgenschutzring aber auch dazu, das für den Ventilschaft vorhandene Durchgangsloch in der Felge von außen abzudichten. Insbesondere kann der Felgenschutzring kostengünstig als Kunststoffspritzgussteil hergestellt sein, was sich im Vergleich zu einer Verwendung einer teuren Überwurfmutter mit Vorsprung zur Klemmung wesentlich günstiger im Hinblick auf die Herstellungskosten auswirkt.

Die Erfindung sieht in Ausgestaltung für eine erste Ausführungsform vor, dass das Abscherungselement als wenigstens eine kreissegmentförmige und von der Innenfläche des Felgenschutzringes sich radial nach innen erstreckende Klemmfläche ausgebildet ist, die während der Montage beim Einschrauben der Überwurfmutter bis zu dem vorbestimmten Abscherungsdrehmoment mit dem Gewindeabschnitt des Ventilschafts eine drehfeste Klemmverbindung bilden kann. Die Überwurfmutter drängt folglich den Felgenschutzring beim Einschrauben in die axiale Richtung hin zum Reifendrucksensor, wobei die wenigstens eine Klemmfläche sich in dem Gewindeabschnitt verklemmt, so dass sich aufgrund der Reibkraft zwischen Felgenschutzring und Überwurfmutter eine Drehung der Überwurfmutter auf den Ventilschaft überträgt und den Ventilschaft mit dreht, wodurch letztlich das Schraubelement angezogen bzw. festgezogen wird.

Hinsichtlich einer leichteren Montage ist es für die erste Ausführungsform von Vorteil, wenn der Felgenschutzring an seinem der Überwurfmutter zugewandten Längsende eine Einsteckausnehmung und die Überwurfmutter an ihrem dem Felgenschutzring zugewandten Längsende eine komplementär zu der Einsteckausnehmung ausgebildete Einsteckkontur aufweisen, wobei die in der Einsteckausnehmung angeordnete Einsteckkontur eine verdrehsichere Verbindung zwischen dem Felgenschutzring und der Überwurfmutter ausbildet. Statt der zuvor angeführten Reibkraft zwischen Felgenschutzring und Überwurfmutter, was einer kraftschlüssigen Verbindung gleichkommt, ist eine formschlüssige Verbindung, die durch die Einsteckkontur und die Einsteckausnehmung gegeben ist, sehr effektiv, da die Montage hinsichtlich der Verbindung von Überwurfmutter und Felgenschutzring ohne zusätzlichen Kraftaufwand im Vergleich zur reibschlüssigen Verbindung auskommt.

Als alternative formschlüssige Verbindung ist es bei der ersten Ausführungsform ebenso von Vorteil, wenn die Überwurfmutter an ihrem dem Felgenschutzring zugewandten Längsende auf ihrem Umfang einen Anschlag und der Felgenschutzring an seinem der Überwurfmutter zugewandten Längsende einen nasenförmigen Aufsatz aufweisen, wobei der nasenförmige Aufsatz sich über den Umfang der angrenzenden Überwurfmutter erstreckt und bei Montage in Anlage an den Anschlag gelangen kann, wobei beim Einschrauben der Überwurfmutter der Anschlag mit dem am Anschlag anliegenden Aufsatz eine verdrehsichere Anschlagsverbindung ausbilden kann.

Bei einer zweiten Ausführungsform des erfindungsgemäßen Reifendruckkontrollsystems ist vorgesehen, dass der Felgenschutzring auf seiner Innenfläche eine radial nach innen gerichtete Nase und der Ventilschaft in seiner Umfangswandung eine Ausnehmung aufweisen, wobei die Nase des Felgenschutzringes in der Ausnehmung des Ventilschafts angeordnet ist und die Nase zusammen mit der Ausnehmung eine verdrehsichere Verbindung zwischen dem Felgenschutzring und dem Reifenventil ausbilden. Bei der zweiten Ausführungsform kommt ein speziell ausgebildetes Reifenventil zum Einsatz, um eine drehfeste Verbindung zwischen dem Felgenschutzring und dem Ventilschaft sicher zustellen, die nicht nur bis zu einem vorbestimmten Drehmoment vorherrscht, sondern während der gesamten Montage aufrechterhalten bleibt.

In Ausgestaltung der zweiten Ausführungsform ist es dann von Vorteil, wenn das Abscherungselement als ein nasenförmiger Abscherungsansatz an dem der Überwurfmutter zugewandten Längsende des Felgenschutzringes ausgebildet ist und sich über den Umfang der angrenzenden Überwurfmutter erstreckt, wobei der nasenförmige Abscherungsansatz von einer Abscherungsfläche, die auf dem Umfang der Überwurfmutter an ihrem dem Felgenschutzring zugewandten Längsende ausgebildet ist, bei Erreichen des vorgegebenen Abscherungsdrehmoments abscherbar ausgebildet ist.

Alternativ dazu ist bei der zweiten Ausführungsform vorgesehen, dass das Abscherungselement als nasenförmiger Abscherungsansatz an dem der Überwurfmutter zugewandten Längsende des Felgenschutzringes ausgebildet ist und in eine am Umfang der angrenzenden Überwurfmutter ausgebildete Abscherungsausnehmung eintauchend angeordnet ist, wobei der nasenförmige Abscherungsansatz von einer als Erhebung in der Abscherungsausnehmung ausgebildeten Abscherungsfläche bei Erreichen des vorgegebenen Abscherungsdrehmoments abscherbar ausgebildet ist.

Bei der zweiten Ausführungsform sind der Felgenschutzring und die Überwurfmutter drehfrei zueinander angeordnet. Um zu gewährleisten, dass die Überwurfmutter zumindest mit einer Drehung um 340° bis ca. 350° auf den Gewindeabschnitt des Ventilschafts aufgeschraubt werden kann, bevor eine gemeinsame Drehung von Überwurfmutter, Felgenschutzring und Reifenventil erfolgt, um mit Hilfe des Schraubelements den Reifendrucksensor zu fixieren, sieht die Erfindung in Ausgestaltung der zweiten Ausführungsform vor, dass der Felgenschutzring auf seinem Außenrand einen sich in Richtung der Überwurfmutter erstreckenden und elastisch verformbaren Sicherungsarm aufweist, der in klemmender Weise auf dem Umfang der Überwurfmutter bis zum Erreichen eines vorbestimmten Montagedrehmoments aufliegen und Überwurfmutter und Felgenschutzring zueinander umfangsmäßig ausrichten kann.

Der Sicherungsarm ist nur im Vorfeld der eigentlichen Montage von Bedeutung und soll bei Montage den eigentlichen Prozess nicht beeinträchtigen. Zu diesem Zweck ist es von Vorteil, wenn das vorbestimmte Montagedrehmoment kleiner ist als das vorbestimmte Abscherungsdrehmoment. Folglich wird der Sicherungsarm in einem frühen Stadium der Montage unwirksam und stellt keine Behinderung für die weitere Montage dar.

Schließlich ist es in Ausgestaltung der Erfindung von Vorteil, wenn das vorbestimmte Abscherungsdrehmoment wenigstens vier Newtonmeter beträgt. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1 den hinteren Teil eines Fahrzeugs mit einer Felge, einem Luftreifen und einem Reifenventil,
Figur 2 eine perspektivische Darstellung auf eine Felge, an der ein Reifendruckkontrollsystem gemäß der vorliegenden Erfindung angebracht ist,
Figur 3 eine Perspektivansicht auf das erfindungsgemäße Reifendruckkontrollsystem, wobei der Konturverlauf der Felge lediglich angedeutet ist,
Figur 4 eine perspektivische Einzelteildarstellung des erfindungsgemäßen Reifendruckkontrollsystems,
Figur 5 einen ersten Montageschritt, bei dem das Reifenventil, an dem ein Reifendrucksensor angebracht ist, durch ein Durchgangsloch in der Felge gesteckt wird,
Figur 6 einen zweiten Montageschritt, bei dem das Reifenventil innenseitig an die Felge gedrückt wird und eine Überwurfmutter über den durchgesteckten Abschnitt des Reifenventils gesteckt wird,
Figur 7 einen dritten Montageschritt, bei dem die Überwurfmutter auf einen Gewindeabschnitt des Reifenventils geschraubt wird,
Figur 8 einen vierten Montageschritt, bei dem der Reifendrucksensor an das Felgenbett gedrückt wird,
Figur 9 einen fünften Montageschritt, bei dem das Schraubelement mit dem Reifendrucksensor verschraubt wird,
Figur 10 einen sechsten Montageschritt, bei dem ein vorbestimmtes Abscherungsdrehmoment erreicht wird und ein Abscherungselement abgeschert wird, so dass die Überwurfmutter mit der Felge fest verschraubt werden kann,
Figur 11 in perspektivischer Ansicht eine erste Ausführungsform des Reifendruckkontrollsystems,
Figur 12 einen Felgenschutzring der ersten Ausführungsform in Perspektivansicht,
Figur 13 eine Überwurfmutter der ersten Ausführungsform in Perspektivansicht,
Figur 14 in perspektivischer Ansicht eine alternative Ausgestaltung der ersten Ausführungsform des Reifendruckkontrollsystems,
Figur 15 einen Felgenschutzring der alternativen Ausgestaltung der ersten Ausführungsform in Perspektivansicht,
Figur 16 eine Überwurfmutter der alternativen Ausgestaltung der ersten Ausführungsform in Perspektivansicht,
Figur 17 in perspektivischer Ansicht eine zweite Ausführungsform des Reifendruckkontrollsystems vor Montage,
Figur 18 ein Reifenventil der zweiten Ausführungsform in Perspektivansicht,
Figur 19 eine Überwurfmutter der zweiten Ausführungsform in Perspektivansicht,
Figur 20 einen Felgenschutzring der zweiten Ausführungsform in Perspektivansicht,
Figur 21 in perspektivischer Ansicht die zweite Ausführungsform des Reifendruckkontrollsystems nach Montage,
Figur 22 in perspektivischer Ansicht eine alternative Ausführungsform der zweiten Ausführungsform des Reifendruckkontrollsystems vor Montage,
Figur 23 ein Reifenventil der alternativen, zweiten Ausführungsform in Perspektivansicht,
Figur 24 eine Überwurfmutter der alternativen, zweiten Ausführungsform in Perspektivansicht,
Figur 25 einen Felgenschutzring der alternativen, zweiten Ausführungsform in Perspektivansicht und
Figur 26 in perspektivischer Ansicht die alternative, zweite Ausführungsform des Reifendruckkontrollsystems nach Montage.

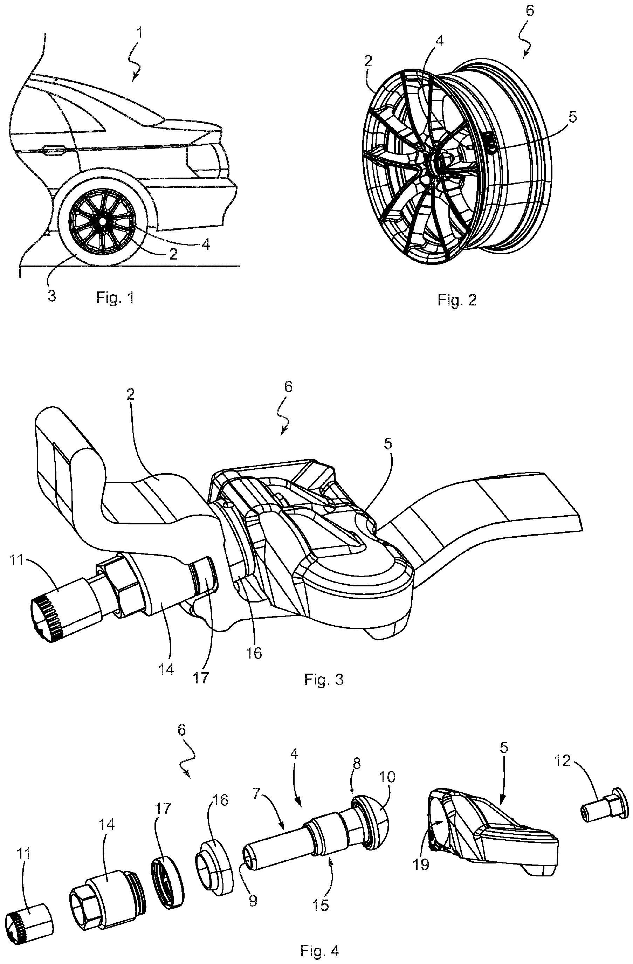

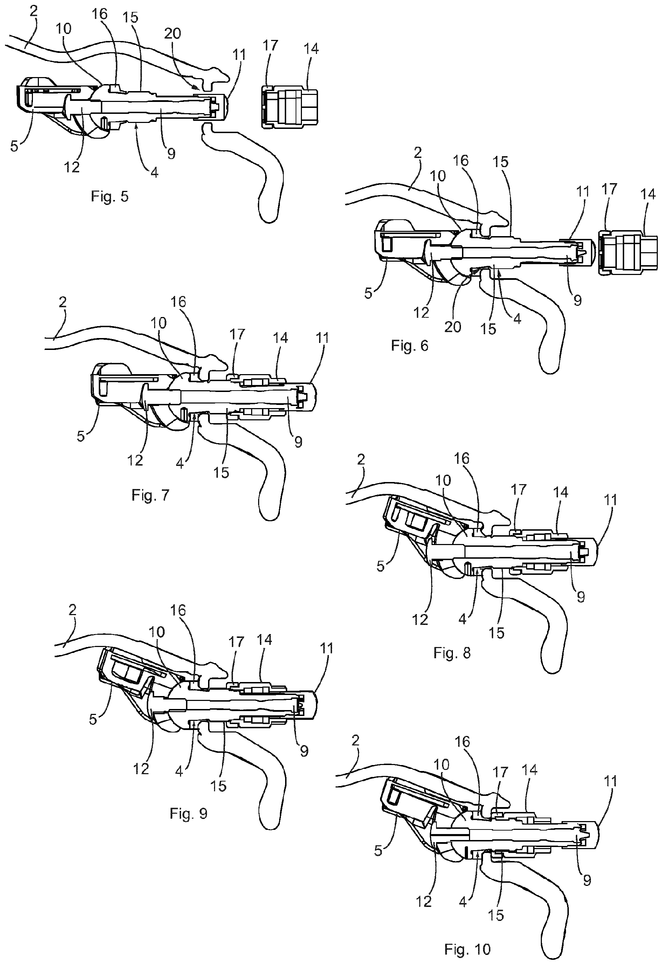

In Figur 1 ist das Heck eines Fahrzeugs 1 und ein auf einer Felge 2 sitzender, hinterer Luftreifen 3 zu sehen. Aus der Felge 2 ragt ein Reifenventil 4 hervor, an dessen Ventilfuß 8 ein Reifendrucksensor 5 befestigt ist, wie es aus den Figuren 2 und 3 ersichtlich ist. Figur 3 zeigt eine Perspektivansicht eines erfindungsgemäßen Reifendruckkontrollsystems 6, wobei der Konturverlauf der Felge 2 aus Gründen einer besseren Übersichtlichkeit in der Figur 3 nur angedeutet ist. In Figur 4 ist das erfindungsgemäße Reifendruckkontrollsystem 6 ebenfalls in einer perspektivischen Darstellung gezeigt, allerdings hier in einer Einzelteildarstellung. In der Felge 2 ist eine lediglich aus den Figuren 5 bis 10 ersichtliche Durchgangsöffnung 20 ausgeformt, durch die ein Ventilschaft 7 des Reifenventils 4 gesteckt ist. Das Reifenventil 4 weist eine axial verlaufende Ventilbohrung 9 (siehe unter anderem Figuren 5 bis 10) auf, die in einer kalottenartigen Stirnfläche 10 des Ventilfußes 8 mündet. An dem dem Ventilfuß 8 fernen Ende des Reifenventils 4 ist eine Ventilkappe 11 auf das Ende aufschraubbar. Der Reifendrucksensor 5 ist über ein Schraubelement 12, welches zum Beispiel eine Hohlschraube sein kann, in bekannter Weise an dem Reifenventil 4 fixiert, indem das Schraubelement 12 in die Ventilbohrung 9 eingeschraubt wird. Dabei ist die kalottenartige Stirnfläche 10 des Ventilfußes 8 in einer Kaverne 19 des Gehäuses des Reifendrucksensors 5 (siehe zum Beispiel Figur 4) angeordnet. Auf der anderen Seite der Felge 2 ist das Reifenventil 4 mit Hilfe einer Überwurfmutter 14 an der Felge 2 fixiert, die auf einen Gewindeabschnitt 15 aufgeschraubt wird, der auf dem Ventilschaft 7 des Reifenventils 4 ausgebildet ist. Zwischen dem Ventilfuß 8 und der Felge 2 ist ein elastischer Ring 16 auf den Ventilschaft 7 aufgeschoben, der innenseitig der Felge 2 eine Art Dämpfer zwischen Felge 2 und Reifendrucksensor 5 darstellt und die Felge 2 von innen abdichtet. Außenseitig der Felge 2 ist ein Felgenschutzring 17 angeordnet, der ebenfalls auf den Ventilschaft 7 aufgeschoben ist und zwischen der Überwurfmutter 14 und der Felge 2 angeordnet ist. Der Felgenschutzring 17 dient dem Schutz der Felge 2 vor Beschädigung bei einem zu hohen Anzugsdrehmoment der Überwurfmutter 14 und dichtet zusätzlich die Durchgangsöffnung 20 der Felge 2 ab. Erfindungsgemäß weist der über den Ventilschaft 7 gesteckte und zwischen Überwurfmutter 14 und Reifendrucksensor 5 angeordnete Felgenschutzring 17 ein Abscherungselement auf, welches den Felgenschutzring 17 mit dem Reifenventil 4 oder der Überwurfmutter 14 bis zu einem vorbestimmten Abscherungsdrehmoment drehfest verbindet, worauf nachstehend noch im Detail eingegangen wird.

Zuvor ist in den Figuren 5 bis 10 in schematischer Weise der Montageverlauf des erfindungsgemäßen Reifendruckkontrollsystems 6 gezeigt. Vor der eigentlichen Montage ist bereits der Reifendrucksensor 5 mit dem Reifenventil 4 verschraubt, wobei die Verschraubung noch relativ locker ist und eine relative Bewegung zwischen dem Reifenventil 4 und dem Reifendrucksensor 5 erlaubt. Mit anderen Worten erlaubt die kalottenartige Stirnfläche 10 des Ventilfußes 8, die in der Kaverne 19 des Reifendrucksensors 5 angeordnet ist, eine relative Schwenkbewegung. In einem ersten Montageschritt (siehe Figur 5) wird das Reifenventil 4 durch eine Durchgangsöffnung 20 in der Felge 2 durchgesteckt, so dass der Gewindeabschnitt 15 des Ventilschafts 7 auf der anderen (außen liegenden) Seite der Felge 2 angeordnet ist. In einem zweiten Montageschritt (siehe Figur 6) wird dann das Reifenventil 4 innenseitig an die Felge 2 gedrückt. Ferner wird in einem dritten Montageschritt (siehe Figur 7) die Überwurfmutter 14 auf den durch die Durchgangsöffnung 20 hindurchgesteckten Ventilschaft 7 mit dem Gewindeabschnitt 15 aufgesteckt. Dabei wird die Überwurfmutter 14 auf den Gewindeabschnitt 15 des Reifenventils 4 aufgeschraubt, wobei das Aufschrauben mit weniger als einer vollen Umdrehung (<360°) erfolgt. Denn eine unvollständige Umdrehung reicht aus, um eine drehfeste Verbindung des Abscherungselements, welches an dem Felgenschutzring 17 ausgebildet ist, mit dem Reifenventil 4 oder der Überwurfmutter 14 herzustellen, worauf nachstehend noch im Detail eingegangen wird. In einem vierten Montageschritt (siehe Figur 8) wird der Reifendrucksensor 5 an das Felgenbett der Felge 2 angedrückt, so dass das Gehäuse des Reifendrucksensors 5 auf dem Felgenbett aufliegt. Anschließend wird in einem fünften Montageschritt (siehe Figur 9) das Schraubelement 12 mit dem Reifendrucksensor verschraubt, indem die Überwurfmutter 14 gedreht wird. Die Überwurfmutter 14 ist erfindungsgemäß mit dem Felgenschutzring 17 und dem Ventilschaft 7 bis zu einem vorbestimmten Abscherungsdrehmoment drehfest verbunden, so dass eine anfängliche Drehbewegung der Überwurfmutter 14 zu einem Festziehen des Schraubelements 12 führt, bis das Schraubelement 12 bis zu einem Anschlag am Gehäuse des Reifendrucksensors 5 eingeschraubt ist. Auf diese Weise wird eine Verschraubung des Ventilschafts 7 auf der Innenseite der Felge 2 mit dem Schraubelement 12 des Reifendrucksensors 5 erreicht. Ist dort das Schraubelement 12 bis zum Anschlag eingedreht, so steigt das Drehmoment zwischen dem Felgenschutzring 17 und der Überwurfmutter 14 bzw. dem Ventilschaft 7 (je nachdem, mit welchem Bauteil der Felgenschutzring eine temporäre Verbindung bis zu dem vorbestimmten Abscherungsdrehmoment eingeht) an, so dass das Abscherelement 18 abgeschert wird und die Überwurfmutter 14 weiter auf den Gewindeabschnitt 15 des Ventilschafts 7 aufgeschraubt werden kann, bis die Überwurfmutter 14 an der Felge 2 anliegt und das Reifenventil 4 an der Felge 2 fixiert ist (siehe Figur 10).

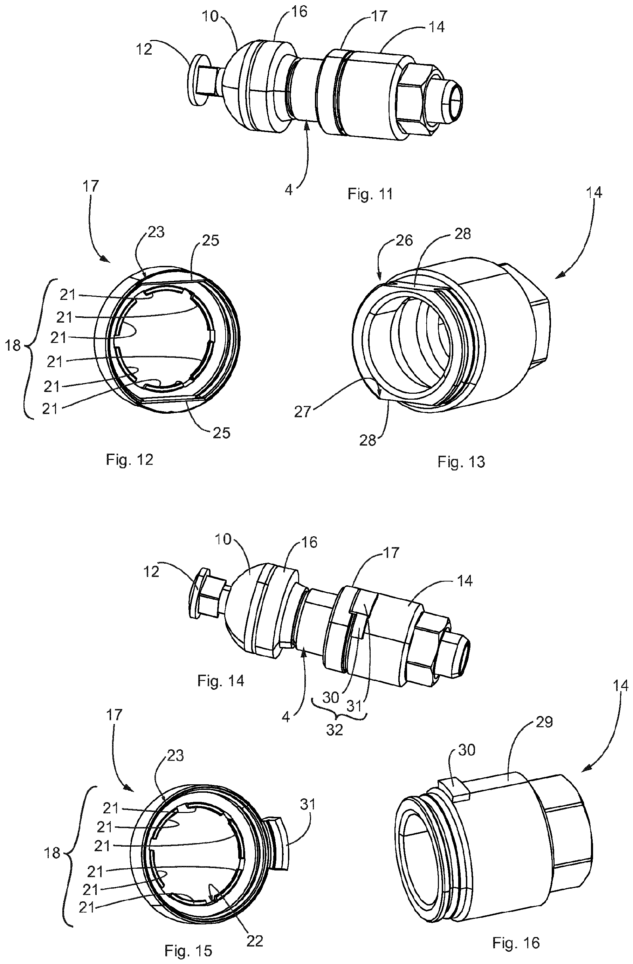

Die Figuren 11 bis 13 zeigen eine erste Ausführungsform für das Reifendruckkontrollsystem 6 gemäß der vorliegenden Erfindung, wohingegen in den Figuren 14 bis 16 eine Alternative bzw. Abwandlung der ersten Ausführungsform dargestellt ist, so dass auch von einer alternativen ersten Ausführungsform gesprochen werden darf. Aus Gründen der Übersichtlichkeit sind lediglich die Bauteile gezeigt und nachstehend beschrieben, durch welche sich diese erste Ausführungsform und auch die alternative erste Ausführungsform auszeichnen.

Die Figuren 11 und 14 zeigen jeweils in perspektivischer Ansicht die erste Ausführungsform des Reifendruckkontrollsystems 6, wobei jeweils das Reifenventil 4 gezeigt ist, auf dessen Ventilschaft 7 der elastische Ring 16, der Felgenschutzring 17 und die Überwurfmutter 14 aufgesteckt sind und an dessen Ventilfuß 8 das Schraubelement 12 in die Ventilbohrung 9 eingeschraubt ist. Bei der ersten und alternativen ersten Ausführungsform gemäß den Figuren 11 bis 16 ist das erfindungsgemäße Abscherungselement 18 von insgesamt sechs Klemmflächen 21 gebildet (siehe Figuren 12 und 15), die an der Innenfläche 22 des Felgenschutzringes 17 angeformt sind und sich radial nach innen erstrecken. Die sechs Klemmflächen 21 sind kreissegmentförmig ausgebildet und gleichmäßig über den Innenumfang des Felgenschutzringes 17 verteilt angeordnet.

Wie den Figuren 12 und 13 für die erste Ausführungsform zu entnehmen ist, weist der Felgenschutzring 17 zusätzlich zu den Klemmflächen 21 an seinem der Überwurfmutter 14 zugewandten Längsende 23 eine Einsteckausnehmung auf, zu der zwei parallel verlaufende Anschlagsflächen 25 zählen, die innenseitig des Felgenschutzringes 17 ausgebildet sind. Zu diesen parallel verlaufenden Anschlagsflächen 25 weist die Überwurfmutter 14 an ihrem dem Felgenschutzring 17 zugewandten Längsende 26 eine komplementär zu der Einsteckausnehmung ausgebildete Einsteckkontur 27 auf (siehe Figur 13). Die Einsteckkontur 27 weist zwei parallel verlaufende Seitenflächen 28 auf, über welche die Anschlagsflächen 25 des Felgenschutzringes 17 geschoben werden, so dass der Felgenschutzring 17 mit seiner Einsteckausnehmung auf die Einsteckkontur 27 der Überwurfmutter 14 formschlüssig aufsteckbar ist, wodurch die Einsteckkontur 27 und die in der Einsteckausnehmung angeordnete Einsteckkontur 27 eine verdrehsichere Verbindung zwischen dem Felgenschutzring 17 und der Überwurfmutter 14 ausbilden. Durch diese verdrehsichere Verbindung bewirkt eine Drehung der Überwurfmutter 14 eine gleichzeitige Drehung des Felgenschutzringes 17, wobei beim Aufschrauben der Überwurfmutter 14 auf den Gewindeabschnitt 15 des Ventilschafts 7 die Klemmflächen 21 sich mit dem Gewindeabschnitt 15 verklemmen. Die Klemmung bewirkt, dass letztlich bei Drehung der Überwurfmutter 14 der Felgenschutzring 17 und der Ventilschaft 7 gedreht werden, wodurch das Schraubelement 12 angezogen wird, bis das Schraubelement 12 an einem Anschlag des Reifendrucksensors 5 anliegt. Bei weiterer Drehung der Überwurfmutter 14 steigt das Drehmoment an, bis ein vorbestimmtes Abscherungsdrehmoment erreicht ist, ab dem die Klemmflächen 21 des Abscherungselements 18 abgeschert werden, so dass die Überwurfmutter 14 weiter auf den Ventilschaft 7 aufgeschraubt werden kann, bis die Überwurfmutter 14 bzw. der Felgenschutzring 17 an der Felge 2 anliegt.

Bei der Alternative der ersten Ausführungsform gemäß der Figuren 14 bis 16 ist statt der verdrehsicheren Verbindung durch Einsteckausnehmung und Einsteckkontur 27 eine verdrehsichere Anschlagsverbindung vorgesehen, wohingegen das Abscherungselement 18 auch bei der Alternative der ersten Ausführungsform von sechs Klemmflächen 21 gebildet wird, die innenseitig des Felgenschutzringes 17 ausgebildet sind, so dass auf die vorstehenden Ausführungen verwiesen sei. Hingegen weist bei der alternativen ersten Ausführungsform die Überwurfmutter 14 an ihrem dem Felgenschutzring 17 zugewandten Längsende 26 auf ihrem äußeren Umfang 29 einen Anschlag 30 auf, wohingegen bei dem Felgenschutzring 17 an seinem der Überwurfmutter 14 zugewandten Längsende 23 ein nasenförmiger Aufsatz 31 vorgesehen ist. Der nasenförmige Aufsatz 31 erstreckt sich über den äußeren Umfang 29 der angrenzenden Überwurfmutter 14, so dass der nasenförmige Aufsatz 31 bei Montage in Anlage an den Anschlag 30 gelangt. Folglich bilden beim Einschrauben der Überwurfmutter 14 der Anschlag 30 und der am Anschlag 30 anliegende Aufsatz 31 eine verdrehsichere Anschlagsverbindung 32 (siehe Figur 14) aus.

Wie zuvor für die verdrehsichere Verbindung bei der ersten Ausführungsform sorgt die Anschlagsverbindung 32 bei der alternativen ersten Ausführungsform zusammen mit den im Gewindeabschnitt 15 klemmenden Klemmflächen 21 des Abscherungselements 18 des Felgenschutzringes 17 dafür, dass in einem ersten Montageschritt die Überwurfmutter 14, der Felgenschutzring 17 und der Ventilschaft 7 drehfest miteinander verbunden sind, so dass eine Drehung der Überwurfmutter 14 ein Anziehen des Schraubelements 12 bewirkt, wie es vorstehend bereits beschrieben worden ist, worauf an dieser Stelle verwiesen wird, um Wiederholungen zu vermeiden. Wenn das Schraubelement 12 festgezogen ist, dann führt eine weitere Drehung der Überwurfmutter 14 zu einem Anstieg des Drehmoments, bis das vorbestimmte Abscherungsdrehmoment erreicht wird, bei dem sich die Klemmflächen 21 des Felgenschutzringes 17 am Gewindeabschnitt 15 des Ventilschafts 7 abscheren. Nach Abscherung der Klemmflächen 21 kann die Überwurfmutter 14 dann weiter auf den Ventilschaft 7 aufgeschraubt werden, bis die Überwurfmutter 14 bzw. der Felgenschutzring 17 an der Felge 2 anliegt.

Somit unterscheiden sich die in den Figuren 11 bis 16 gezeigten Ausführungen durch die verdrehsichere Verbindung und die verdrehsichere Anschlagsverbindung 32, folglich durch die Verbindung, die während der gesamten Montage ihre Verdrehsicherung beibehält.

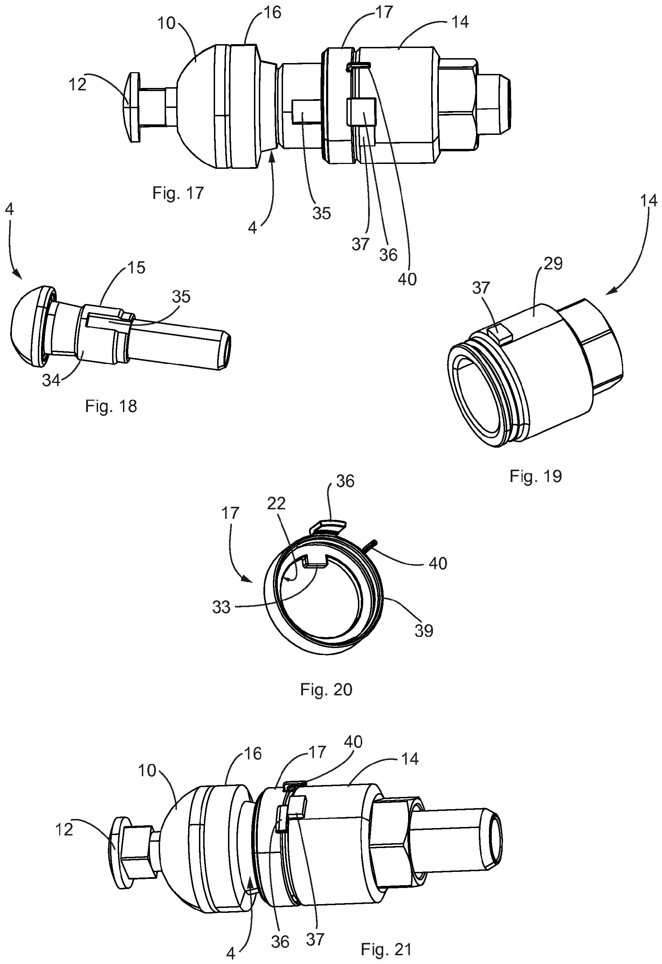

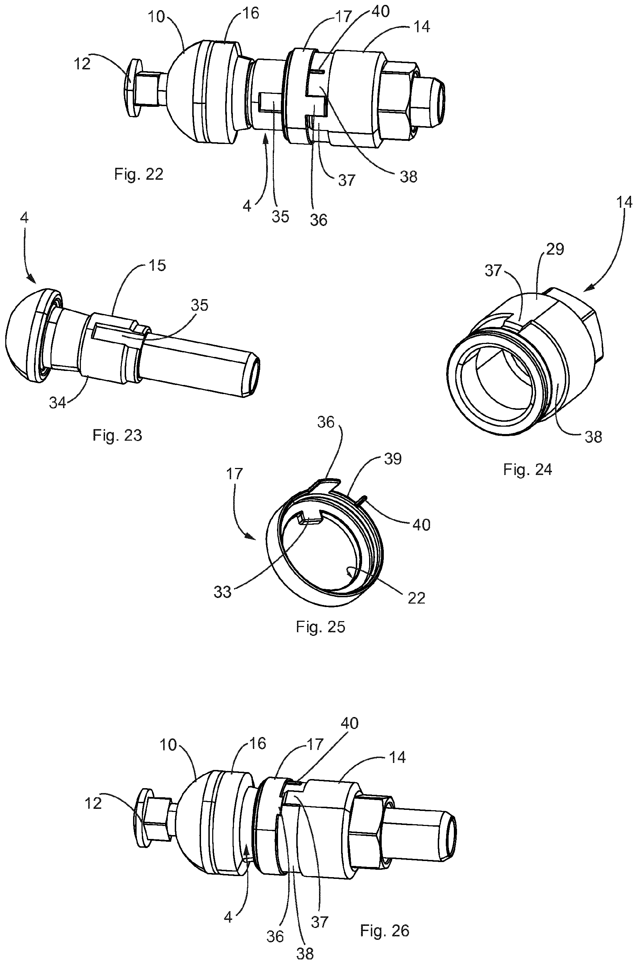

In den Figuren 17 bis 21 ist eine zweite Ausführungsform eines erfindungsgemäßen Reifendruckkontrollsystems 6 gezeigt, wohingegen die Figuren 22 bis 26 eine alternative zweite Ausführungsform darstellen. Die Figuren 17 und 22 zeigen jeweils das Reifenventil 4, auf dessen Ventilschaft 7 der elastische Ring 16, der Felgenschutzring 17 und die Überwurfmutter 14 aufgesteckt sind und an dessen Ventilfuß 8 das Schraubelement 12 in die Ventilbohrung 9 eingeschraubt ist.

Die zweite Ausführungsform und alternative zweite Ausführungsform unterscheiden sich von der ersten Ausführungsform primär dadurch, dass die während der gesamten Montage beibehaltene Verdrehsicherung nun nicht mehr zwischen dem Felgenschutzring 17 und der Überwurfmutter 14 sondern zwischen dem Felgenschutzring 17 und dem Ventilschaft 7 ausgebildet ist. Folglich besteht der weitere Unterschied darin, dass die temporäre, bis zu dem vorbestimmten Abscherungsdrehmoment wirksame Verdrehsicherung, die bei der ersten Ausführungsform zwischen dem Ventilelement 4 und dem Felgenschutzring 17 ausgebildet war, bei der zweiten Ausführungsform (und auch bei der alternativen zweiten Ausführungsform) zwischen dem Felgenschutzring 17 und der Überwurfmutter 14 ausgebildet ist.

Für die Funktion der während der gesamten Montage beibehaltenen Verdrehsicherung weist bei der zweiten Ausführungsform und der alternativen zweiten Ausführungsform der Felgenschutzring 17 gemäß den Figuren 20 und 25 auf seiner Innenfläche 22 eine radial nach innen gerichtete Nase 33 und der Ventilschaft 7 in seiner Umfangswandung 34 eine Ausnehmung 35 auf. Die Ausnehmung 35 ist zu der von der Stirnfläche 10 wegweisenden Seite offen, so dass die Nase 33 des Felgenschutzringes 17 in die Ausnehmung 35 in axialer Richtung einschiebbar ist und darüber hinaus in axialer Richtung bewegbar in der Ausnehmung 35 angeordnet ist, wenn die Überwurfmutter 14 in Richtung der Felge 2 aufgeschraubt wird. Für eine verdrehsichere Verbindung während der gesamten Montage ist die Nase 33 des Felgenschutzringes 17 in der Ausnehmung 35 des Ventilschafts 7 angeordnet, was sowohl für die zweite Ausführungsform (siehe Figuren 17 bis 21) als auch für die alternative zweite Ausführungsform (siehe Figuren 22 bis 26) gilt. Die Umfangswandung 34 entspricht im wesentlichen dem Gewindeabschnitt 15 der Reifenventils 4.

Folglich ist im Unterschied zur ersten Ausführungsform, bei welcher die temporäre drehfeste Verbindung bis zum Erreichen des vorbestimmten Abscherungsdrehmoments zwischen dem Ventilschaft 7 und dem Felgenschutzring 17 ausgebildet ist, bei der zweiten Ausführungsform die temporäre drehfeste Verbindung bis zum Erreichen des vorbestimmten Abscherungsdrehmoments zwischen dem Felgenschutzring 17 und der Überwurfmutter 14 ausgebildet, wie nachstehend erläutert wird.

Wie aus den Figuren 17 bis 21 ersichtlich ist, ist bei der zweiten Ausführungsform das Abscherungselement 18 als ein nasenförmiger Abscherungsansatz 36 an dem der Überwurfmutter 14 zugewandten Längsende 23 des Felgenschutzringes 17 ausgebildet. Der nasenförmige Abscherungsansatz 36 erstreckt sich über den Umfang 29 der angrenzenden Überwurfmutter 14. Auf dem Umfang 29 der Überwurfmutter 14 ist eine klotzförmige Abscherungsfläche 37 angeformt. Bei Montage liegt der Abscherungsansatz 36 an der Abscherungsfläche 37 an, wie es in Figur 17 gezeigt ist. Aufgrund dieser Anlage wird bei Drehung der Überwurfmutter 14 auch der Felgenschutzring 17 mitgedreht, wobei aufgrund der drehfesten Verbindung zwischen Felgenschutzring 17 und Ventilschaft 7 das Schraubelement 12 den Reifendrucksensor 5 festschraubt. Wenn das Schraubelement 12 festgeschraubt ist, steigt das Drehmoment zwischen Überwurfmutter 14 und Felgenschutzring 17 an, bis das vorbestimmte Abscherungsdrehmoment erreicht wird. Bei Erreichen des vorbestimmten Abscherungsdrehmoments wird dann der nasenförmige Abscherungsansatz 36 von einer Abscherungsfläche 37 abgeschert (siehe Figur 21), so dass die Überwurfmutter 14 weiter auf den Ventilschaft 7 aufgeschraubt werden kann, bis sie an der Felge 2 anliegt.

Die alternative zweite Ausführungsform (siehe Figuren 22 bis 26) unterscheidet sich nicht wesentlich von der in den Figuren 17 bis 21 gezeigten zweiten Ausführungsform. Auch bei der alternativen zweiten Ausführungsform weist der Felgenschutzring 17 als Abscherungselement 18 einen nasenförmigen Abscherungsansatz 36 auf, der an dem der Überwurfmutter 14 zugewandten Längsende 23 des Felgenschutzringes 17 ausgebildet ist. Bis zum Erreichen des vorbestimmten Abscherungsdrehmoments ist der nasenförmige Abscherungsansatz 36 in einer Abscherungsausnehmung 38 eintauchend angeordnet. In der Abscherungsausnehmung 38 gelangt dann der Abscherungsansatz 36 bei Drehung der Überwurfmutter 14 in Anlage an eine Abscherungsfläche 37, die als Erhebung innerhalb der Abscherungsausnehmung 38 ausgebildet ist. Wenn sich nun der Abscherungsansatz 36 in Anlage an die Abscherungsfläche 37 befindet, so wird bei Drehung der Überwurfmutter 14 der Felgenschutzring 17 mitgedreht, wodurch letztlich der drehfest mit dem Felgenschutzring 17 verbundene Ventilschaft 7 mitgedreht und das Schraubelement 12 festgezogen wird. Wenn das Schraubelement 12 festgezogen ist und der Reifendrucksensor auf der Innenseite der Felge 2 fixiert ist, steigt das Drehmoment zwischen Überwurfmutter 14 und Felgenschutzring 17 an. Bei Erreichen des vorbestimmten Abscherungsdrehmoments wird dann der Abscherungsansatz 36 abgeschert (siehe Figur 26), so dass auch jetzt wieder die Überwurfmutter 14 weiter auf den Ventilschaft 7 aufgeschraubt werden kann, bis sie an der Felge 2 anliegt.

Bei der zweiten Ausführungsform gemäß den Figuren 17 bis 26 ist der Abscherungsansatz 36 anfänglich frei drehbar, bis er in Anlage zu der Abscherungsfläche 37 gelangt. Dadurch ist es möglich, dass die Überwurfmutter 14 nur eine halbe Drehung ausführen kann, bevor der Abscherungsansatz 36 in Anlage an die Abscherungsfläche 37 gelangt. Eine halbe Drehung gewährleistet jedoch nicht, dass die Überwurfmutter 14 in ausreichender Weise auf den Gewindeabschnitt 15 des Ventilschafts 7 aufgeschraubt werden kann. Um einen Einschraubweg der Überwurfmutter 14 mit einer Drehung von wenigstens 340° zu gewährleisten, bevor der Abscherungsansatz 36 in Anlage an die Abscherungsfläche 37 gelangt, weist der Felgenschutzring 17 auf seinem Außenrand 39 einen sich in Richtung der Überwurfmutter 14 erstreckenden und elastisch verformbaren Sicherungsarm 40 auf. Der Sicherungsarm 40 liegt in klemmender Weise auf dem äußeren Umfang 29 bzw. der Abscherungsausnehmung 38 der Überwurfmutter 14 auf, bis ein vorbestimmtes Montagedrehmoment erreicht ist, bei dem die Überwurfmutter 14 und der Felgenschutzring 17 entsprechend zueinander umfangsmäßig ausgerichtet sind. Es versteht sich, dass das vorbestimmte Montagedrehmoment kleiner ist als das vorbestimmte Abscherungsdrehmoment.

Für alle vorstehend besprochenen Ausführungsformen ist vorgesehen, dass das vorbestimmte Abscherungsdrehmoment wenigstens vier Newtonmeter beträgt. Dabei ist das Festschrauben des Schraubelements 14 zur Fixierung des Reifendrucksensors 5 bereits bei einem Drehmoment von etwa zwei bis zweieinhalb Newtonmeter abgeschlossen.

Das Abscherungselement 18 gemäß der vorliegenden Erfindung kann aus einem Material, welches schwächer als das Material des Gewindeabschnitts 15 oder der Abscherungsfläche 37 ist, bestehen, um die gewünschte Abscherungseigenschaft ab dem vorbestimmten Abscherungsdrehmoment zu zeigen. Denkbar ist es aber auch, dass das Abscherungselement 18 eine Sollbruchstelle, also eine definierte Materialschwächung, aufweist, an der das Abscherungselement 18 bei Erreichen des vorbestimmten Abscherungsdrehmoments bricht bzw. abgeschert wird.

Soweit vorstehend bei den beschriebenen Ausführungsformen gleiche Bezugszeichen verwendet werden, betreffen diese jeweils identische oder gleiche Elemente oder Bauteile.

Zusammenfassend ist es der Kerngedanke der vorliegenden Erfindung, die Überwurfmutter 14 zusammen mit dem abdichtenden und klemmenden Felgenschutzring 17 zu handhaben. Beim Einschrauben klemmt der Felgenschutzring 17 im Gewindeabschnitt 15 des Ventilschafts 7 bei einem Drehmoment bis zu 4,2 Newtonmeter, wobei die Verbindungsschraube bzw. das Schraubelement 12 mit dem Gehäuse der Radelektronik bzw. dem Reifendrucksensor 5 mit einem Drehmoment von 2,1 bis 2,5 Newtonmeter festverschraubt wird. Nach Erreichen der Endposition (Anschlag) und steigendem Drehmoment (4,0 bis 4,2 Newtonmeter) bricht die an dem Felgenschutzring 17 ausgebildete Kante (Klemmflächen 21 oder Abscherungsansatz 36) im vorgegebenen Bereich ab (Sollbruchstelle) und die Überwurfmutter 14 wird von außen mit der Felge 2 festverschraubt.

Die vorstehend beschriebene Erfindung ist selbstverständlich nicht auf die beschriebenen und dargestellten Ausführungsformen beschränkt. Der Rahmen der Erfindung ist nur durch die Ansprüche definiert.

## Patentansprüche

1. Reifendruckkontrollsystem (6) für ein Fahrzeug (1) zur Ermittlung reifenspezifischer Parameter, aufweisend:
einen an einer Felge (2) eines Luftreifens (3) des Fahrzeugs (1) anbringbaren Reifendrucksensor (5),
ein Reifenventil (4), welches einen Ventilschaft (7) mit einer längsverlaufenden Ventilbohrung (9) aufweist, die in einer kalottenartigen Stirnfläche (10) eines Ventilfußes (8) mündet,
ein Schraubelement (12), welches den Reifendrucksensor (5) und das Reifenventil (4) an dessen Ventilfuß (8) durch Eingreifen in die Ventilbohrung (9) verbindet, und
eine zur Fixierung des Reifenventils (4) an der Felge (2) dienende und auf einen Gewindeabschnitt (15) des Ventilschafts (7) aufgeschraubte Überwurfmutter (14),
wobei
ein über den Ventilschaft (7) gesteckter und zwischen Überwurfmutter (14) und Reifendrucksensor (5) angeordneter Felgenschutzring (17) vorgesehen ist, **dadurch gekennzeichnet, dass** an dem Felgenschutzring (17) ein den Felgenschutzring (17) mit dem Reifenventil (4) oder der Überwurfmutter (14) bis zu einem vorbestimmten Abscherungsdrehmoment drehfest verbindendes Abscherungselement (18) ausgebildet ist.

2. Reifendruckkontrollsystem (6) nach Anspruch 1, **dadurch gekennzeichnet, dass** das Abscherungselement (18) als wenigstens eine kreissegmentförmige und von der Innenfläche (22) des Felgenschutzringes (17) sich radial nach innen erstreckende Klemmfläche (21) ausgebildet ist, die während der Montage beim Einschrauben der Überwurfmutter (14) bis zu dem vorbestimmten Abscherungsdrehmoment mit dem Gewindeabschnitt (15) des Ventilschafts (7) eine drehfeste Klemmverbindung bilden kann.

3. Reifendruckkontrollsystem (6) nach Anspruch 2, **dadurch gekennzeichnet, dass** der Felgenschutzring (17) an seinem der Überwurfmutter (14) zugewandten Längsende (23) eine Einsteckausnehmung und die Überwurfmutter (14) an ihrem dem Felgenschutzring (17) zugewandten Längsende (26) eine komplementär zu der Einsteckausnehmung ausgebildete Einsteckkontur (27) aufweisen, wobei die in der Einsteckausnehmung angeordnete Einsteckkontur (27) eine verdrehsichere Verbindung zwischen dem Felgenschutzring (17) und der Überwurfmutter (14) ausbildet.

4. Reifendruckkontrollsystem (6) nach Anspruch 2, **dadurch gekennzeichnet, dass** die Überwurfmutter (14) an ihrem dem Felgenschutzring (17) zugewandten Längsende (26) auf ihrem Umfang (29) einen Anschlag (30) und der Felgenschutzring (17) an seinem der Überwurfmutter (14) zugewandten Längsende (23) einen nasenförmigen Aufsatz (31) aufweisen, wobei der nasenförmige Aufsatz (31) sich über den Umfang (29) der angrenzenden Überwurfmutter (14) erstreckt und bei Montage in Anlage an den Anschlag (30) gelangen kann, wobei beim Einschrauben der Überwurfmutter (14) der Anschlag (30) mit dem am Anschlag (30) anliegenden Aufsatz (31) eine verdrehsichere Anschlagsverbindung (32) ausbilden kann.

5. Reifendruckkontrollsystem (6) nach Anspruch 1, **dadurch gekennzeichnet, dass** der Felgenschutzring (17) auf seiner Innenfläche (22) eine radial nach innen gerichtete Nase (33) und der Ventilschaft (7) in seiner Umfangswandung (34) eine Ausnehmung (35) aufweisen, wobei die Nase (33) des Felgenschutzringes (17) in der Ausnehmung (35) des Ventilschafts (7) angeordnet ist und die Nase (33) zusammen mit der Ausnehmung (35) eine verdrehsichere Verbindung zwischen dem Felgenschutzring (17) und dem Reifenventil (4) ausbilden.

6. Reifendruckkontrollsystem (6) nach Anspruch 5, **dadurch gekennzeichnet, dass** das Abscherungselement (18) als ein nasenförmiger Abscherungsansatz (36) an dem der Überwurfmutter (14) zugewandten Längsende (23) des Felgenschutzringes (17) ausgebildet ist und sich über den Umfang (29) der angrenzenden Überwurfmutter (14) erstreckt, wobei der nasenförmige Abscherungsansatz (36) von einer Abscherungsfläche (37), die auf dem Umfang (29) der Überwurfmutter (14) an ihrem dem Felgenschutzring (17) zugewandten Längsende (26) ausgebildet ist, bei Erreichen des vorgegebenen Abscherungsdrehmoments abscherbar ausgebildet ist.

7. Reifendruckkontrollsystem (6) nach Anspruch 5, **dadurch gekennzeichnet, dass** das Abscherungselement (18) als nasenförmiger Abscherungsansatz (36) an dem der Überwurfmutter (14) zugewandten Längsende (23) des Felgenschutzringes (17) ausgebildet ist und in eine am Umfang (29) der angrenzenden Überwurfmutter (14) ausgebildete Abscherungsausnehmung (38) eintauchend angeordnet ist, wobei der nasenförmige Abscherungsansatz (36) von einer als Erhebung in der Abscherungsausnehmung (38) ausgebildeten Abscherungsfläche (37) bei Erreichen des vorgegebenen Abscherungsdrehmoments abscherbar ausgebildet ist.

8. Reifendruckkontrollsystem (6) nach Anspruch 5, 6 oder 7, **dadurch gekennzeichnet, dass** der Felgenschutzring (17) auf seinem Außenrand (39) einen sich in Richtung der Überwurfmutter (14) erstreckenden und elastisch verformbaren Sicherungsarm (40) aufweist, der in klemmender Weise auf dem Umfang (29) der Überwurfmutter (14) bis zum Erreichen eines vorbestimmten Montagedrehmoments aufliegen und Überwurfmutter (14) und Felgenschutzring (17) zueinander umfangsmäßig ausrichten kann.

9. Reifendruckkontrollsystem (6) nach Anspruch 8, **dadurch gekennzeichnet, dass** das vorbestimmte Montagedrehmoment kleiner ist als das vorbestimmte Abscherungsdrehmoment.

10. Reifendruckkontrollsystem (6) nach Anspruch 9, **dadurch gekennzeichnet, dass** das vorbestimmte Abscherungsdrehmoment wenigstens vier Newtonmeter beträgt.

## Claims

1. Tyre pressure control system (6) for a vehicle (1) for determining tyre-specific parameters, comprising:
a tyre pressure sensor (5) applicable to a rim (2) of a pneumatic tyre (3) of the vehicle (1)
a tyre valve (4) having a valve shaft (7) with a longitudinally extending valve boring (9) which opens into a dome-shaped end face (10) of a valve base (8),
a screw element (12) which connects the tyre pressure sensor (5) and the tyre valve (4) at its valve base (8) through engaging in the valve boring (9), and
a union nut (14) screwed onto a threaded section (15) of the valve shaft (7) and serving to fix the tyre valve (4) to the rim (2)
wherein
a rim protection ring (17) placed over the valve shaft (7) and arranged between the union nut (14) and tyre pressure sensor (5) is provided, **characterised in that**
on the rim protection ring (17) a shear-off element (18) is formed which connects the rim protection ring (17) to the tyre valve (4) or the union nut (14) in a rotationally fixed manner up to a predetermined shearing torque.

2. Tyre pressure control system (6) according to claim 1 **characterised in that** the shear-off element (18) is configured as at least one circular segment-shaped clamping surface (21) which extends radially inwards from the inner surface (22) of the rim protection ring (17) and during assembly on screwing in of the union nut (14) up to the predetermined shearing torque can form a rotationally fixed clamped connection with the threaded section (15) of the valve shaft (7).

3. Tyre pressure control system (6) according to claim 2 **characterised in that** on its longitudinal end (23) facing the union nut (14) the rim protection ring (17) has an insertion recess and the union nut (14) on its longitudinal end (26) facing the rim protection ring (17) has an insertion contour (27) designed to be complementary to the insertion recess, wherein the insertion contour (27) arranged in the insertion recess forms a rotationally fixed connection between the rim protection ring (17) and the union nut (14).

4. Tyre pressure control system (6) according to claim 2 **characterised in that** on its longitudinal end (26) facing the rim protection ring (17) the union nut (14) has a stop (30) on its circumference (29) and on its longitudinal end (23) facing the union nut (14) the rim protection ring (17) has a nose-shaped attachment (31), wherein the nose-shaped attachment (31) extends over the circumference (29) of the adjoining union nut (14) and during assembly can come into contact with the stop (30), wherein on screwing in the union nut (14) the stop (30) together with the attachment (31) contacting the stop (30) can form a rotationally fixed stop connection (32).

5. Tyre pressure control system (6) according to claim 1 **characterised in that** on its inner surface (22) the rim protection ring (17) has a radially inwardly directed nose (33) and in its circumferential wall (34) the valve shaft (7) has a recess (35), wherein the nose (33) of the rim protection ring (17) is arranged in the recess (35) of the valve shaft (7) and the nose (33) together with the recess (35) form a rotationally fixed connection between the rim protection ring (17) and the tyre valve (4).

6. Tyre pressure control system (6) according to claim 5 **characterised in that** the shear-off element (18) is configured as a nose-shaped shear-off attachment (36) on the longitudinal end (23) of the rim protection ring (17) facing the union nut (14) and extends over the circumference (29) of the adjoining union nut (14), wherein the nose-shaped shear-off attachment (36) is constituted by a shear-off surface (37) which is formed on the circumference (29) of the union nut (14) on its longitudinal end (26) facing the rim protection ring (17) in a manner so as to shear off when the predetermined shearing torque is reached.

7. Tyre pressure control system (6) according to claim 5 **characterised in that** the shear-off element (18) is configured as a nose-shaped shear-off attachment (36) on the longitudinal end (23) of the rim protection ring (17) facing the union nut (14) and is arranged entering into a shear-off recess (38) formed on the circumference (29) of the adjoining union nut (14), wherein the nose-shaped shear-off attachment (36) is designed as a shear-off surface (37) formed as an elevation in the shear-off recess (38) in a manner so as to shear off when the predetermined shearing torque is reached.

8. Tyre pressure control system (6) according to claim 5, 6 or 7 **characterised in that** on an outer edge (39) the rim protection ring (17) has an elastically deformable securing arm (40) which extends in the direction of the union nut (14) and can rest in a clamping manner on the circumference (29) of the union nut (14) until a predetermined assembly torque is reached and can circumferentially align the union nut (14) and the rim protection ring (17) to each other.

9. Tyre pressure control system (6) according to claim 8 **characterised in that** the predetermined assembly torque is smaller than the predetermined shearing torque.

10. Tyre pressure control system (6) according to claim 9 **characterised in that** the predetermined shearing torque is at least four Newton metres.

## Revendications

1. Système de contrôle de pression de pneu (6) pour un véhicule automobile (1) pour déterminer des paramètres spécifiques au pneu, comportant :
un capteur de pression de pneu (5) pouvant être monté sur une jante (2) d'un pneumatique (3) du véhicule automobile (1),
une valve de pneu (4), laquelle comporte un corps de valve (7) avec un trou de valve passant longitudinalement (9), qui débouche dans une surface frontale de type calotte (10) d'un pied de valve (8),
un élément de vissage (12), lequel raccorde le capteur de pression de pneu (5) et la valve de pneu (4) au pied de valve (8) de celle-ci en venant en prise dans le trou de valve (9), et
un écrou de raccord (14) servant à la fixation de la valve de pneu (4) à la jante (2) et vissé sur une section filetée (15) du corps de valve (7),
une bague de protection de jante (17) emboîtée sur le corps de valve (7) et disposée entre l'écrou de raccord (14) et le capteur de pression de pneu (5) étant prévue, **caractérisé en ce que** sur la bague de protection de jante (17), est constitué un élément de cisaillement (18) raccordant solidairement en rotation la bague de protection de jante (17) à la valve de pneu (4) ou à l'écrou de raccord (14) jusqu'à un couple de cisaillement prédéterminé.

2. Système de contrôle de pression de pneu (6) selon la revendication 1, **caractérisé en ce que** l'élément de cisaillement (18) est constitué comme au moins une surface de serrage (21) en forme de segment de cercle et s'écartant radialement vers l'intérieur de la surface intérieure (22) de la bague de protection de jante (17), qui peut former avec la section filetée (15) du corps de valve (7) un raccord de serrage solidaire en rotation pendant le montage lors du vissage de l'écrou de raccord (14) jusqu'au couple de cisaillement prédéterminé.

3. Système de contrôle de pression de pneu (6) selon la revendication 2, **caractérisé en ce que** la bague de protection de jante (17) comporte à son extrémité longitudinale (23) tournée vers l'écrou de raccord (14) une cavité d'emboîtement et l'écrou de raccord (14) comporte à son extrémité longitudinale (26) tournée vers la bague de protection de jante (17) un profil d'emboîtement (27) constitué de façon complémentaire à la cavité d'emboîtement, le profil d'emboîtement (27) disposé dans la cavité d'emboîtement constituant un raccord bloqué en rotation entre la bague de protection de jante (17) et l'écrou de raccord (14).

4. Système de contrôle de pression de pneu (6) selon la revendication 2, **caractérisé en ce que** l'écrou de raccord (14) comporte sur son extrémité longitudinale (26) tournée vers la bague de protection de jante (17) sur sa périphérie (29) une butée (30) et la bague de protection de jante (17) comporte sur son extrémité longitudinale (23) tournée vers l'écrou de raccord (14) un chapeau en forme de tenon (31), le chapeau en forme de tenon (31) s'étendant sur la périphérie (29) de l'écrou de raccord adjacent (14) et pouvant parvenir lors du montage en appui sur la butée (30), la butée (30) pouvant constituer avec le chapeau (31) adhérant à la butée (30) un raccord de butée bloqué en rotation (32) lors du vissage de l'écrou de raccord (14).

5. Système de contrôle de pression de pneu (6) selon la revendication 1, **caractérisé en ce que** la bague de protection de jante (17) comporte sur sa surface intérieure (22) un tenon (33) dirigé radialement vers l'intérieur et le cops de valve (7) comporte dans sa paroi périphérique (34) une cavité (35), le tenon (33) de la bague de protection de jante (17) étant disposé dans la cavité (35) du corps de valve (7) et le tenon (33) constituant ensemble avec la cavité (35) un raccord bloqué en rotation entre la bague de protection de jante (17) et la valve de pneu (4).

6. Système de contrôle de pression de pneu (6) selon la revendication 5, **caractérisé en ce que** l'élément de cisaillement (18) est formé comme une saillie de cisaillement en forme de tenon (36) sur l'extrémité longitudinale (23) de la bague de protection de jante (17), tournée vers l'écrou de raccord (14) et s'étend sur la périphérie (29) de l'écrou de raccord adjacent (14), la saillie de cisaillement en forme de tenon (36) d'une surface de cisaillement (37) constituée sur la périphérie (29) de l'écrou de raccord (14) à son extrémité longitudinale (26) tournée vers la bague de protection de jante (17), étant constituée cisaillable en atteignant le couple de cisaillement prédéfini.

7. Système de contrôle de pression de pneu (6) selon la revendication 5, **caractérisé en ce que** l'élément de cisaillement (18) est constitué comme saillie de cisaillement en forme de tenon (36) sur l'extrémité longitudinale (23) de la bague de protection de jante (17), tournée vers l'écrou de raccord (14) et est disposé plongeant dans une cavité de cisaillement (38) constituée à la périphérie (29) de l'écrou de raccord adjacent (14), la saillie de cisaillement en forme de tenon (36) étant constituée cisaillable d'une surface de cisaillement (37) constituée comme élévation dans la cavité de cisaillement (38) en atteignant le couple de cisaillement prédéfini.

8. Système de contrôle de pression de pneu (6) selon la revendication 5, 6 ou 7, **caractérisé en ce que** la bague de protection de jante (17) comporte sur son bord extérieur (39) une languette de sécurité (40) s'étendant en direction de l'écrou de raccord (14) et élastiquement déformable, qui peut s'appliquer en mode de serrage à la périphérie (29) de l'écrou de raccord (14) jusqu'à l'obtention d'un couple de montage prédéterminé et peut orienter conformément à la périphérie l'écrou de raccord (14) et la bague de protection de jante (17) l'un par rapport à l'autre.

9. Système de contrôle de pression de pneu (6) selon la revendication 8, **caractérisé en ce que** le couple de montage prédéterminé est plus petit que le couple de cisaillement prédéterminé.

10. Système de contrôle de pression de pneu (6) selon la revendication 9, **caractérisé en ce que** le couple de cisaillement prédéterminé est au moins de quatre Newton-mètres.
